# EUROPEAN PATENT SPECIFICATION

(11) **EP 0 993 988 B1**
(45) Date of publication and mention of the grant of the patent: **02.07.2008**
(21) Application number: 99120012.2
(22) Date of filing: 15.10.1999
(51) Int. Cl.: B60Q 1/26, B60Q 3/00

(54) **Attachment means of automobile light to automobile body**
Befestigungseinrichtung einer Fahrzeugleuchte am Fahrzeug
Moyen de fixation d'un appareil d'éclairage sur la carrosserie d'un véhicule

(30) Priority: 15.10.1998 JP 29388398
(43) Date of publication of application: 19.04.2000
(73) Proprietor: Stanley Electric Co., Ltd., Meguro-ku Tokyo 153-8636 (JP)
(72) Inventor: Katsumata, Shinichi, Yokohama-shi, Kanagawa-ken 225-0014 (JP); Konaka, Masaaki, Yokohama-shi, Kanagawa-ken 225-0014 (JP)
(74) Representative: Wagner, Karl H.

(56) References cited:
- EP-A- 0 525 541
- EP-A2- 0 525 541
- DE-U1- 08 903 289
- FR-A- 1 287 164
- JP-U- 2 084 744
- JP-U- 5 032 115
- JP-U- 57 067 845
- JP-U- 61 082 302
- US-A- 3 321 731
- US-A- 5 089 939
- US-A- 5 660 456

## Description

### BACKGROUND OF THE INVENTION

### Field of the Invention

The present invention relates to a construction of an attachment means of an automotive part such as an automobile light to an automobile body, and more particularly to a construction capable of facilitating to sort or separate the automobile light components according to the individual material when the lamp is disposed of or destroyed to be recycled, and also capable of ensuring secure attachment of the automobile light to the automobile body.

### Discussion of the Related Art

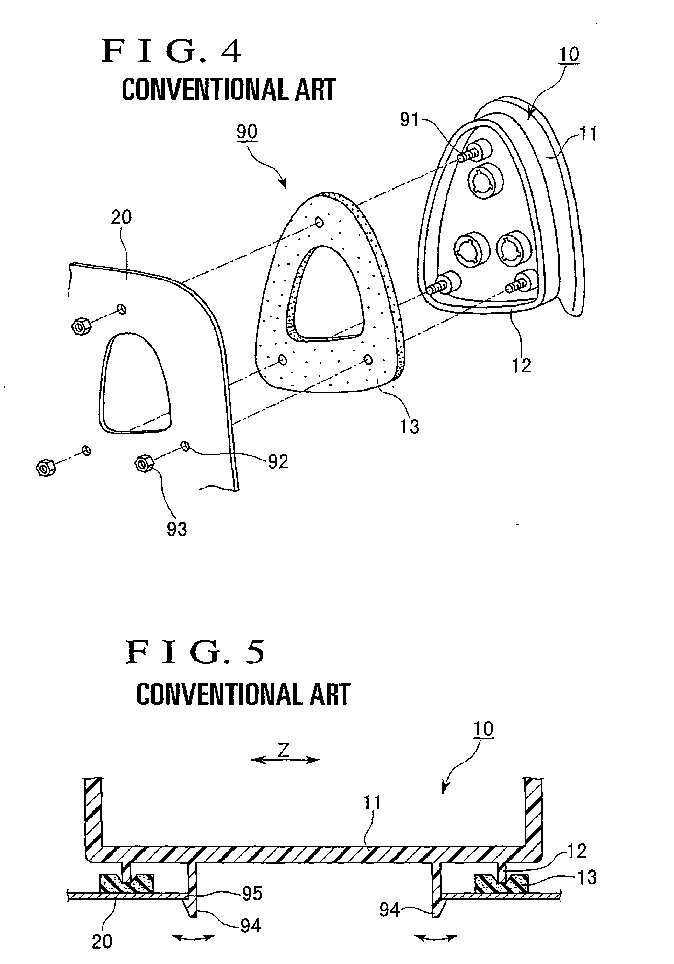

Fig. 4 illustrates a conventional attachment means 90 of an automobile light 10 to an automobile body 20. The attachment means 90 comprises a housing 11 of the automobile light 10 with a rib 12 along the perimeter of an outer back portion of housing 11, three stud bolts 91 positioned inside the rib 12, three through holes positioned inside the stud bolts 91 for the attachment of a light bulb to the housing 11, a gasket 13 interposed between the housing 11 and the automobile body 20 and having three through holes corresponding to the stud bolts 91, the automobile body 20 with three through holes 92 corresponding to the stud bolts 91, and three nuts 93 which are corresponding to the stud bolts 91 and are attached from inside of the automobile body 20. Each stud bolt 91 is fixed in the housing 11 by injection molding or by a press-in process using ultrasonic waves. Then, each stud bolt 91 is inserted from outside of the automobile body 20, through a corresponding through hole in the gasket 13, and through the corresponding through hole 92 of the automobile body 20. The stud bolts 91 are fixed with the nuts 93 from inside of the automobile body 20 while the gasket 13 is pressed on the rib 12 of the housing 11.

Fig. 5 illustrates another conventional attachment means of an automobile light 10 to an automobile body 20. The automobile light 10 comprises a housing 11 having an aperture (not shown in Fig. 5; the aperture is provided for the purpose of exchanging a light bulb in the housing 11 by a new one), and a pair of elastic hooks 94 projecting from an outer back surface of the housing 11 and made of plastic resin which is the same material as used for the housing 11. The automobile light 10 is attached by being pushed from the outside of the automobile body 20 into an aperture 95 of the automobile body 20. When the automobile light 10 is pushed in, the elastic hooks 94 resiliently curve or bend and return to their initial position due to their elasticity, thereby the elastic hooks 94 hold or engage the attachment portion of the automobile body 20.

The conventional attachment means of an automobile light to an automobile body has the following problems. The attachment means 90 in Fig. 4 is certainly able to provide a secure fixing by using a stud bolt 91. However, since the stud bolt 91, which is usually metal, is strongly adhered to surrounding portions of the housing, which is made of resin, when the automobile light 10 is disposed of and destroyed, it is difficult to decompose and sort each automobile light component with respect to every material for recycling without giving any damage to the resin plastic material. On the other hand, the attachment means in Fig. 5 does not have the sorting problem concerning material recycling. However, since the hooks 94 are elastic and designed to bend or curve in the Z direction, which is parallel to the automobile body 20 and which is an engaging direction of respective attachment portions between the elastic hooks 94 and the automobile body 20, it has relatively low shock-proof reliability in the case any external external concentration or force is applied in the Z direction. If any force is applied in the Z direction and one of the pair of elastic hooks 94 curves, the other elastic hook 94 easily detaches from the aperture, and the automobile light 10 may detach from the automobile body 20.

EP-A-0 525 541 relates to a vehicle light which can be inserted into an opening in a vehicle body and has a housing which is shaped to be longer, viewed in plan view, than its width and has attachment means arranged on the housing. The housing rests with part of its outer edge region on the edge of the opening in the vehicle body. In this arrangement, the edge of the vehicle body which supports the housing part extends on both sides of the longer central axis and, to the greatest possible extent, on one side of the small central axis of the housing which is constructed to be longer than it is wide. The housing is attached in the opening of the vehicle body via a spring-loaded catch which is located on one of its short sides and is automatically released by exerting pressure or pulling, and the housing is attached on the other short side by means of a cam which engages behind the lower inner edge of the opening in the vehicle body.

Also, attention is drawn to US-A-3,321,731 which discloses a marker lamp adapted for mounting to an automotive vehicle, and connection into an electrical circuit, without the use of tools.

Further, JP 61-82302 U discloses a fixed engagement rib and a flexible engagement rib. The flexible engagement rib is U-shaped to generate flexibility. The fixed engagement rib is thick at its root portion. Accordingly, it does not bend. On attachment of a lamp lens to the automobile body, the fixed engagement rib is inserted in an aperture and engaged with the aperture edge. Then, the flexible engagement rib is pushed in the aperture while being bent, and the end portion of the rib is engaged with the aperture edge. JP 61-82302 U does not disclose a positioning boss or a projection boss.

JP H02-84744 U discloses a rear combination lamp, including a first engagement projection, a second engagement projection, a projection pin as third engagement projection. This document intends to provide a vehicle light which is not destroyed when a bumper is deformed by collision etc, and being capable of easy attachment to a bumper without using screws, and improved appearance of the vehicle without screw in the appearance of the vehicle light.

Finally, attention is drawn to JP 05-032115 U and JP S57-67845 U.

### SUMMARY OF THE INVENTION

The present invention is directed to an automobile light that substantially obviates one or more of the above problems due to the limitations and disadvantages of the related art.

An object of the invention is to provide an attachment means for the attachment of an automobile light to an automobile body which is able to satisfy both shock-proof requirements when an external force in a disengaging or engaging direction of the attachment portions is applied, and recycling convenience for decomposition and material sorting when the automobile light is disposed of and destroyed.

The present invention provides an attachment means for attaching an automobile light to an automobile body as set forth in claim 1.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both foregoing general description and the following detailed description are exemplary and explanatory and are intended to provide further explanation of the invention as claimed.

### BRIEF DESCRIPTION OF THE DRAWINGS

The accompanying drawings, which are incorporated into and thus constitute a part of this specification, illustrate several embodiments of the invention and, together with the description, serve to explain the principles of the invention.
Fig. 1 illustrates a perspective view of a first preferred embodiment of the present invention.
Fig. 2 illustrates an assembled state of the first preferred embodiment in a cross sectional view along the A-A line in Fig. 1.
Fig. 3 illustrates an attachment process of the automobile light to an automobile body according to the first preferred embodiment of the present invention.
Fig. 4 is a perspective view of a conventional automobile light attachment means to the automobile body.
Fig. 5 illustrates a cross sectional view of another conventional automobile light attachment means to the automobile body.

### DETAILED DESCRIPTION OF THE PREFERRED EMBODIMENTS

Reference will now be made in detail to the preferred embodiments of the present invention. Whenever possible, the same references numbers will be used throughout the drawings to refer to the same or like parts.

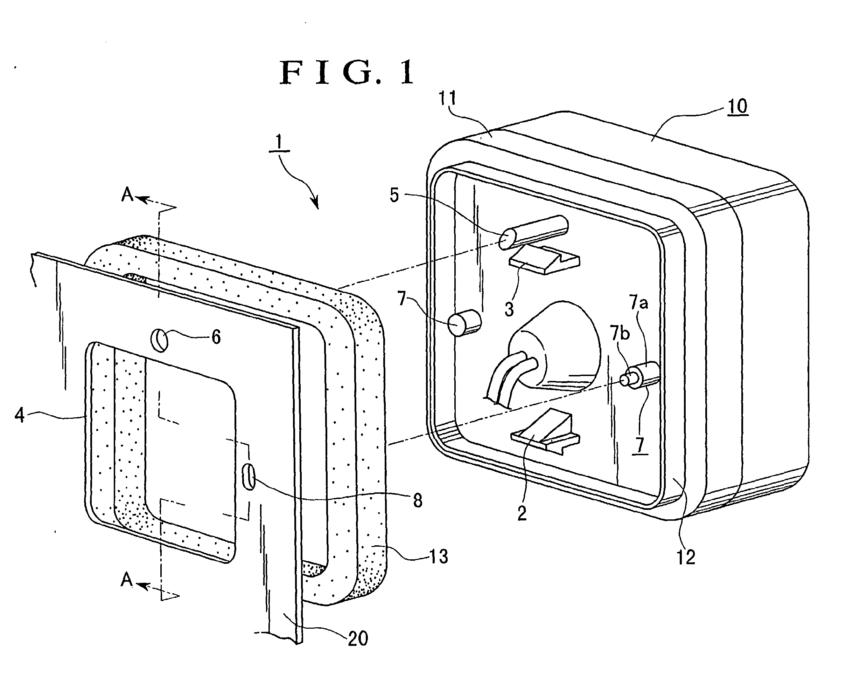

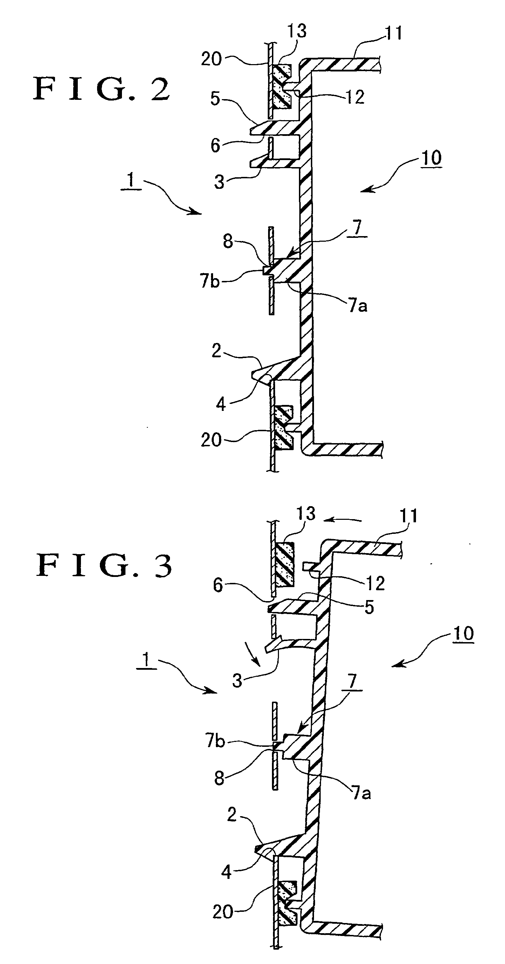

Figs. 1 through 3 illustrate the first preferred embodiment of the present invention. Fig. 1 shows a disassembled state, and Fig. 2 is a cross sectional view along the A-A line in Fig. 1 of an assembled state of said embodiment. Attachment means 1 of an automobile light 10 to an automobile body 20 comprises a pair of hooks 2 and 3 projecting from an outer back surface of a housing 11 of the automobile light 10. The hooks 2,3 are arranged on opposite sides of a light bulb socket and are made of resin material. The hooks 2 and 3 are molded at the same time together with the housing 11 as a unit. The hook 2 is non-elastic, because it is molded with a reinforcement rib facing to the light bulb socket. The hook 3 is designed to be elastic with a predetermined thickness. The hooks 2 and 3 are respectively positioned to be around an aperture 4 of the automobile body 20 when the automobile light 10 is attached to the automobile body 20. Each of said hooks defines engagement surfaces, called below hook engagement surfaces. Said hook engagement surfaces are in engagement with engagement surfaces, called below body engagement surfaces, defined by said body 20. In the embodiment of Fig. 1, said body engagement surfaces are formed by said aperture 4. The aperture 4 of the automobile body 20 may be used solely for attachment of the automobile light, or may be used (if it is big enough) both for the attachment of the automobile light and for replacing the light bulb in the housing 10. A positioning boss 5 is arranged in the vicinity of an engaging side (forming said hook engaging surface) of the elastic hook 3, and has a sufficient height to reach the automobile body 20 through a first positioning through hole 6 (preferably outside the aperture 4) when the automobile light 10 is attached to the automobile body 20. The first positioning through hole 6 has a diameter corresponding to the diameter of the positioning boss 5.

A pair of projection bosses 7 is arranged on the housing 10 for preventing the automobile light 10 from being deformed or moved toward the automobile body 20 when any external force is applied in such a direction. The pair of projection bosses 7 are arranged so as to come into engagement with the automobile body 20 outside of the aperture 4 when the light 10 is attached to said body 20. The first projection boss 7 has a height which is sufficient to reach a surface on the automobile body 20 facing the housing 10. The second projection boss 7 comprising a base portion 7a and a projecting end 7b. The projecting end 7b has a smaller diameter than in the base portion 7a and corresponds to a second positioning through hole 8 on the automobile body 20. Said hole 8 is preferably outside the aperture 4. When the automobile light 10 is attached to the automobile body 20, the projecting end 7b is inserted in the second positioning Through hole 8, and the base portion 7a is not inserted and the base portion 7a is positioned to surround, i.e. not to project through the second positioning through hole 8.

Fig. 3 illustrates the attachment process of light 10 by the attachment means 1. First, the hook 2 is hung in its predetermined position around the aperture 4. I.e. the hook 2 engagement surface is brought into engagement with the corresponding body engagement surface. Second, the automobile light 10 is pivoted or rotated with a center of rotation defined by the non-elastic hook 2, and pushed toward the automobile body 20. Then, the hook 3 is pressed so that it resiliently deflects and then snaps with its hook 3 engagement surface behind the body engagement surface so as to be attached in its predetermined position around the aperture 4. Simultaneously the positioning boss 5 is inserted in the first positioning through hole 6 and the projecting end 7b is attached in the second positioning through hole 8. The projecting end of the positioning boss 5 may be cut to be arc shaped in a cross section and in concert with the pivotal movement of the housing 11 for facilitating insertion of the positioning boss 5 into the first positioning through hole 6. For the same reason, the second positioning through hole 8 may be formed to be a substantially rectangular or oval shaped hole. The shape of said hole appears like a continuous trace of the projecting end 7b being moved into the direction of insertion.

Since the positioning boss 5 is inserted into the positioning through hole 6 at the same time as the elastic hook 3 is pressed to the automobile body 20, i.e. aperture 4, it is prevented that the automobile light 10 is being moved in a parallel direction to the automobile body 20 when any external force is applied to the automobile light 10 in such a parallel direction. It is also prevented that the external force is applied to the elastic hook 3. Therefore, the risk of accidental detachment of the automobile light 10 from the automobile body 20 is greatly reduced. However, when any excessively strong force is applied to the positioning boss 5, the automobile light 10 may rotate with a center of rotation defined by the positioning boss 5. As a preventive means for such a rotation, the projecting end 7b and the second positioning through hole 8 become effective, because the two portions comprising the positioning boss 5 and the projecting end 7b are inserted in the automobile body 20. The projecting end 7 is effective to spread the external force in a direction pushing the automobile light 10 toward the automobile body 20 and over the surface of the automobile body 20 which contacts the projection end 7.

The housing 11 has a water-proof rib 12 along a perimeter of the outer back surface of the housing 11 for protecting the aperture 4 from water or humidity coming in. When the automobile light 10 is attached to the automobile body 20, the water-proof rib 12 is pressed on the automobile body 20 with an interposition of a gasket 13. The height of the rib 12 is determined taking into consideration the amount of the gasket 13 to be compressed.

The operational advantages of the automobile light attachment means 1 according to the preferred embodiment of the present invention will now be described.

First, the attachment means 1 is able to provide a secure fixing of the automobile light 10 to the automobile body 20 using only plastic resin which is a common material for a housing. Second, since the attachment means 1 does not include any metal attachment means such as a stud bolt, it facilitates sorting of the automobile light components according to the materials when the automobile light is disposed of and destroyed for recycling. The second advantage is especially effective to satisfy environmental requirements which is becoming more important to the future.

It will be apparent to those skilled in the art that various changes and modifications can be made without departing from the spirit and scope of the invention. Thus, it is intended that the present invention covers the modifications and variations of this invention and their equivalents.

Summarized the following is provided:
an automobile light 10 attachment means 1 to an automobile body 20 comprising a pair of hooks 2, 3 arranged on the automobile light 10, one of which is elastic and the other of which is non-elastic, each hook 2, 3 engaging with an aperture 4 of the automobile body 20 in a reversed direction to the other, a positioning boss 5 arranged around the non-elastic hook 2, the aperture 4 on the automobile body, a positioning through hole 6 on the automobile body 20 having a diameter corresponding to the diameter of the positioning boss 5. Furthermore, at least one projection boss 7 may be arranged to provide a sufficient distance between the housing 11 and the automobile body 20 for spreading any external force applied from the automobile light 10 toward the automobile body 20 over an outer surface of the automobile body 20, and at least one projection boss 7 is also used as a positioning boss 7b, and the housing 11 has at least two positioning points 5, 7b as a whole. Since the attachment means 1 does not include any metal attachment means such as a stud bolt, it facilitates sorting of the automobile light components by every material when the automobile light 10 is disposed of and destroyed for recycling.

## Claims

1. An attachment means (1) for attaching an automobile light (10) to an automobile body (20), said automobile light (10) comprising a housing (11) made of plastic resin only, said attachment means (1) comprising, on the side of said housing (11):
a non-elastic hook (2) engaging with the automobile body (20) in one direction and having a rib in an opposite direction to said one direction;
an elastic hook (3) engaging with the automobile body (20) in the opposite direction to said one direction;
said attachment means (1) comprising, on the side of the automobile body (20):
an aperture (4) for engagement with the non-elastic hook (2) and the elastic hook (3);
**characterized in that** said attachment means further comprises, on the side of the housing, at least one positioning boss (5) in vicinity of an engaging side of the elastic hook (3), and on the side of the automobile body, at least one positioning through hole (6) through which the positioning
boss (5) passes and having a corresponding diameter to the positioning boss (5); and **in that** said attachment means (1) further comprises, on the side of the housing, a pair of projection bosses (7) located to face each other over the aperture (4) and configured to come into engagement with the automobile body (20) outside of the aperture (4); and
wherein one of said pair of projection bosses (7) has a projection end (7b) passing through a corresponding positioning through hole (8) in the automotive body (20).

2. The attachment means (1) according to claim 1, wherein said non-elastic hook (2), said elastic hook (3), and said housing (11) are formed as one unit by resin molding.

## Patentansprüche

1. Befestigungsmittel (1) zur Befestigung eines Automobillichtes (10) an einem Automobilkörper (20), wobei das Automobillicht (10) ein Gehäuse (11) aufweist, welches nur aus Plastikharz gemacht ist, wobei die Befestigungsmittel (1) auf der Seite des Gehäuses (11) Folgendes aufweisen:
einen nicht elastischen Haken (2), der mit dem Automobilkörper (20) in einer Richtung in Eingriff kommt und eine Rippe in einer entgegengesetzten Richtung zu der einen Richtung hat;
einen elastischen Haken (3), der mit dem Automobilkörper (20) in der entgegengesetzten Richtung der einen Richtung in Eingriff ist;
wobei die Befestigungsmittel (1) auf der Seite des Automobilkörpers Folgendes aufweisen:
eine Öffnung (4) zum Eingriff mit dem nicht elastischen Haken (2) und
dem elastischen Haken (3);
**dadurch gekennzeichnet, dass** die Befestigungsmittel weiter auf der Seite des Gehäuses mindestens einen Positionierungsansatz (5) in der Nachbarschaft einer Eingriffsseite des elastischen Hakens (3) aufweisen, und auf der Seite des Automobilkörpers mindestens ein Positionierungsdurchgangsloch (6), durch welches der Positionierungsansatz (5) hindurchläuft und welches einem dem Positionierungsansatz (5) entsprechenden Durchmesser hat;
und **dadurch**, dass die Befestigungsmittel (1) weiter auf der Seite des Gehäuses ein Paar von vorstehenden Ansätzen (7) aufweisen, die angeordnet sind, um zueinander über der Öffnung (4) hin zu weisen, und die konfiguriert sind, um mit dem Automobilkörper (20) außerhalb der Öffnung (4) in Eingriff zu kommen; und
wobei einer des Paares von vorstehenden Ansätzen (7) ein vorstehendes Ende (7b) hat, welches durch ein entsprechendes Positionierungsdurchgangsloch (8) in dem Automobilkörper (20) hindurchgeht.

2. Befestigungsmittel (1) nach Anspruch 1, wobei der nicht elastische Haken (2), der elastische Haken (3) und das Gehäuse (11) als eine Einheit durch Guss aus Harz geformt sind.

## Revendications

1. Moyen de fixation (1) pour fixer un phare automobile (10) à un châssis d'automobile (20), le phare d'automobile (10) comprenant un boîtier (11) en résine plastique seulement, le moyen de fixation (1) comprenant, du côté du boîtier (11) ;
un crochet non élastique (2) solidaire du châssis d'automobile (20) dans une première direction et comportant une nervure dans une direction opposée à la première direction ;
un crochet élastique (3) solidaire du châssis d'automobile (20) dans la direction opposée à la première direction ; le moyen de fixation (1) comprenant, du côté du châssis d'automobile (20) :
une ouverture (4) pour entrer en contact avec le crochet non élastique (2) et le crochet élastique (3) ;
**caractérisé en ce que** le moyen de fixation comprend en outre du côté du boîtier, au moins un bossage de positionnement (5) au voisinage d'un côté de mise en contact du crochet élastique (3), et du côté du châssis d'automobile (20) au moins un trou traversant de positionnement (6) à travers lequel le bossage de positionnement (5) passe et ayant un diamètre correspondant au bossage de positionnement (5) ; et **en ce que** le moyen de fixation (1) comprend en outre, du côté du boîtier, deux bossages en saillie (7) disposés en face l'un de l'autre au-dessus de l'ouverture (4) et agencés pour venir en contact avec le châssis d'automobile (20) à l'extérieur de l'ouverture (4) ; et
dans lequel l'un des deux bossages en saillie (7) comprend une extrémité en saillie (7B) passant à travers un trou traversant de positionnement correspondant (8) dans le châssis d'automobile (20).

2. Moyen de fixation (1) selon la revendication 1, dans lequel le crochet non élastique (2), le crochet élastique (3) et le boîtier (11) sont formés d'une seule pièce par moulage par de la résine.
